# EUROPEAN PATENT SPECIFICATION

(11) **EP 3 636 457 B1**
(45) Date of publication and mention of the grant of the patent: **07.06.2023**
(21) Application number: 17910402.1
(22) Date of filing: 06.12.2017
(51) Int. Cl.: B60C 11/03, B60C 5/00, B60C 19/00

(54) **TIRE SET FOR THREE-WHEELED VEHICLE**
REIFENSATZ FÜR EIN DREIRÄDRIGES FAHRZEUG
ENSEMBLE DE PNEUS POUR VÉHICULE À TROIS ROUES

(30) Priority: 18.05.2017 JP 2017099003
(43) Date of publication of application: 15.04.2020
(73) Proprietor: Bridgestone Corporation, Tokyo 104-8340 (JP)
(72) Inventor: MURAMATSU Naoya, Tokyo 104-8340 (JP)
(74) Representative: Marks & Clerk LLP
(86) International application number: PCT/JP2017/043866
(87) International publication number: WO 2018/211725

(56) References cited:
- WO-A1-2012/076731
- JP-A- H09 156 323
- JP-A- H09 156 323
- JP-A- S60 143 108
- JP-A- 2001 315 506
- JP-B1- S4 916 581
- JP-B1- S4 916 581
- US-A- 4 088 199
- US-A- 4 583 613
- US-A1- 2007 001 422
- US-B1- 7 543 829

## Description

### TECHNICAL FIELD

The present invention relates to a tire set for three-wheeled vehicles (which may hereinafter be simply called a "tire set"), specifically to a tire set for three-wheeled vehicles to be used with the tire set mounted on the front and rear wheels of a three-wheeled vehicle, and, more particularly, to an improvement of a tire set for motor tricycles for high-speed running.

### BACKGROUND ART

In general, there are two types of three-wheeled vehicles: two wheels at the front and one wheel at the rear, and one wheel at the front and two wheels at the rear. Among these three-wheeled vehicles, the vehicles of a type that makes a turn by tilting the tires during cornering shows a distinctive vehicular body behavior different from the behavior shown by the vehicles of another type that makes a turn without tilting the tires during cornering. Thus, performance requirements for the tires to be used are also different. For example, almost no camber angle is given to a tire applied to the latter type while a camber angle is given to a tire applied to the former type, and therefore, an operational area on the tire crown portion is also different between these types of tires.

As an example of prior art related to tires mounted on a three-wheeled vehicle, Patent Document 1 discloses a tire for motor tricycles, the tire being mounted on each of two rear wheels of a tricycle and including: a pair of longitudinal grooves disposed on a tread surface and continuously extending along the tire circumferential direction on both sides of the tire equator to partition the surface into a central rib and side portions, where the central rib extends along the tire circumferential direction between the longitudinal grooves, and each side portion constitutes an area between the longitudinal groove and the tread ground contact end; and a lateral groove disposed in each of the side portions such that one end of the lateral groove is communicatively connected to the longitudinal groove and the other end extends beyond the tread ground contact end, whereby the area is partitioned into blocks arranged in a line along the tire circumferential direction. Attention is also drawn to the disclosure of US7543829B1.

### RELATED ART DOCUMENT

### PATENT DOCUMENT

Patent Document 1: JP 2001-315506 A (claims and others)

### SUMMARY OF THE INVENTION

### PROBLEMS TO BE SOLVED BY THE INVENTION

In general, the front wheel (front tire) and the rear wheel (rear tire) of a two-wheeled or three-wheeled vehicle have the same rim diameter or the same tire diameter. When, for example, either one of the front wheel and the rear wheel of a two-wheeled vehicle has a smaller diameter than the other, the two-wheeled vehicle provides better handling performance compared with two-wheels vehicles with front and rear wheels having the same rim diameter; however, the wheel having a smaller diameter loses some rigidity, and thus complementary rigidity needs to be added to the smaller-diameter wheel.

On the other hand, a three-wheeled vehicle has two wheels attached to either the front side or the rear side. Thus, when the tires used for the three wheels have the same diameter, the two-wheel side tires have significantly higher rigidity than the one-wheel side because the two-wheel side tires have doubled rigidity and, furthermore, the suspension on the two-wheel side has a total spring constant significantly higher than that on the one-wheel side. Therefore, there have been posed problems of worsening the ride comfort when the tire passes over a projection on the road to cause a strong shake particularly during high-speed running, and of worsening the handling performance due to enhancement of the gyro effect (the force of restoring the attitude generated depending on the turning radius, turning speed, mass, and others of a rotating body) of the vehicle body. To reduce the influence of the gyro effect, making the vehicle body or the tire more lightweight may also be important.

In this regard, the technique disclosed in Patent Document 1 relates to a tire for three-wheeled vehicles of a type that makes a turn without tilting tires during cornering. Thus, the technique does not involve the problem of worsening the handling performance arising out of the aforementioned gyro effect, and does not pose a significant problem of worsening the ride comfort because the technique is not applied to high-speed running. Therefore, the technique cannot solve the problem brought by three-wheeled vehicles of a type that makes a turn by tilting tires during cornering.

Accordingly, an object of the present invention is to provide a tire set for three-wheeled vehicles, the tire set being to be mounted on a three-wheeled vehicle of a type that makes a turn by tilting tires during cornering, and the tire set exhibiting excellent ride comfort, especially during high-speed running, and excellent handling performance and lightness in weight.

### MEANS FOR SOLVING THE PROBLEMS

As a result of conducting extensive studies, the present inventor has found that the above problems can be solved by adopting the configuration described below, and has completed the present invention.

Specifically, the present invention provides the use of a tire set for three-wheeled vehicles as claimed in claim 1.

In the present invention, a negative ratio x in a tread portion of the two-wheel side tire is preferably within a range from 5 to 30% and an inclination angle of the lateral groove with respect to a tire circumferential direction is preferably within a range from 40 to 90°. In the present invention, the two-wheel side tire is preferably a radial tire. Furthermore, in the present invention, a ratio x/y of the negative ratio x in the tread portion of the two-wheel side tire to the negative ratio y in the tread portion of the one-wheel side tire is preferably greater than 1, and more preferably 1.1 to 2.5.

Unless otherwise specified, various dimensions of a tire according to the present invention refer to values obtained by making measurements under unloaded conditions on the tire that has been produced, mounted on a rim defined in an industry standard effective in the region where the tire is to be used, and filled with an internal pressure defined in the industry standard. Examples of the aforementioned industry standard include Japan Automobile Tyre Manufacturers Association (JATMA) YEAR BOOK in Japan, European Tyre and Rim Technical Organisation (ETRTO) STANDARD MANUAL in Europe, and The Tire and Rim Association, Inc. (TRA) YEAR BOOK in the United States.

### EFFECTS OF THE INVENTION

The present invention makes it possible to provide a tire set for three-wheeled vehicles, the tire set being to be mounted on a three-wheeled vehicle of a type that makes a turn by tilting tires during cornering, and the tire set exhibiting excellent ride comfort, especially during high-speed running, and excellent handling performance and lightness in weight.

### BRIEF DESCRIPTION OF THE DRAWINGS

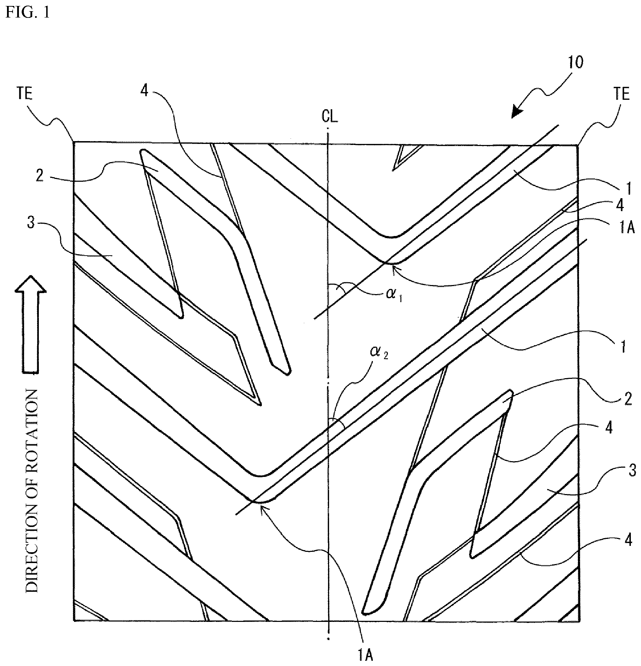

FIG. 1 is a developed view of an example tread pattern on a two-wheel side tire of a tire set for three-wheeled vehicles according to the present invention.

### MODE FOR CARRYING OUT THE INVENTION

Embodiments of the present invention will now be described in detail with reference to the drawing.

A tire set for three-wheeled vehicles according to the present invention is a set of front wheel tire(s) and rear wheel tire(s) to be mounted on a three-wheeled vehicle that is configured with two front wheels and one rear wheel and includes a mechanism for tilting the tires during cornering.

In the tire set of the present invention, two-wheel side tires to be mounted on the two-wheel side are formed to have a tire diameter smaller than a tire diameter of a one-wheel side tire to be mounted on the one-wheel side. Making the tire diameter of the two-wheel side tires smaller than that of the one-wheel side tire provides the effect of improving the handling performance owing to the smaller diameter as well as providing the effect of effectively reducing the rigidity of the two-wheel side, which rigidity would be significantly higher than that of the one-wheel side if the tire diameters are the same on both sides. As a result, better ride comfort and better steering stability can be achieved particularly when the vehicle is running at high speed such as 180 km/hr or even higher at about 240 km/hr. In addition, since both of the two-wheel side tires have a smaller tire diameter, the three-wheeled vehicle as a whole becomes more lightweight, thereby reducing the adverse effect on the handling performance caused by the gyro effect.

The present invention provides effects of the invention when the two-wheel side tires are formed to have a tire diameter smaller than a tire diameter of the one-wheel side tire. However, an excessively large tire diameter of the two-wheel side tires reduces the effect provided by the smaller diameter while an excessively small tire diameter of the two-wheel side tires makes the handling more sensitive to worsen the stability. For this reason, specifically, the ratio Rb/Rm of the tire diameter of the two-wheel side tires Rb to the tire diameter of the one-wheel side tire Rm preferably satisfies 0.8 ≤ Rb/Rm ≤ 0.9, and more preferably satisfies 0.84 ≤ Rb/Rm ≤ 0.86.

It is noted here that, in comparison with the increase in rigidity caused by replacing one wheel with two wheels, the decrease in rigidity of the two-wheel side caused by making the tire diameter smaller is limited. Hence, in order to further reduce the rigidity of the two-wheel side, the two-wheel side tire of the present invention includes a lateral groove disposed on a tread portion and extending across the tire equator. In the case of tires for two-wheeled vehicles, when the diameter of one tire is decreased, the smaller-diameter tire merely becomes insufficient in rigidity, and thus the smaller-diameter tire needs to be more rigid. In contrast, in the case of tires for three-wheeled vehicles as in the present invention, even when the diameter of the two-wheel side tire is decreased, the two-wheel side tire still has excessively higher rigidity than the one-wheel side tire, and thus the smaller-diameter tire further needs to be less rigid. In other words, the technical concept of the present invention is regarded as solving a problem that cannot arise out of tires for two-wheeled vehicles but is specific to tires for three-wheeled vehicles.

FIG. 1 is a developed view of an example tread pattern on a two-wheel side tire of a tire set for three-wheeled vehicles according to the present invention. The arrow in the figure indicates the direction of rotation. As illustrated in the figure, a two-wheel side tire 10 includes a lateral groove 1 disposed on a tread portion of the tire and extending across a tire equator CL. As a result, the spring constant can be decreased to reduce the rigidity of the tire moving in a straight line, thus further reducing the rigidity of the two-wheel side tire, and consequently the handling performance can be further improved.

Therefore, the present invention makes it possible to provide a tire set for three-wheeled vehicles, the tire set being to be mounted on a three-wheeled vehicle of a type that makes a turn by tilting tires during cornering, and the tire set exhibiting excellent ride comfort, especially during high-speed running, and excellent handling performance achieved by lighter-weight tires.

In the illustrated example, the lateral groove 1 is disposed on the tread portion across the tire width direction so as to have both ends opened at tread ends TE. However, the lateral groove 1 is not limited thereto as long as the lateral groove extends across the tire equator CL. For example, either one or both of the ends of the lateral groove 1 may be terminated within the tread portion. The lateral groove 1 is in a substantially linear shape. In the illustrated example, the lateral groove 1 includes a bend portion 1A situated in a place not on the tire equator CL to be in a V shape, and is inclined in different directions on both sides of the bend portion 1A with respect to the tire width direction. However, these are not restrictive; the lateral groove 1 may be inclined in the same direction on both sides of the bend portion 1A with respect to the tire width direction, or may be in a linear shape without having the bend portion 1A.

As illustrated in the figure, the lateral groove 1 in the present invention is preferably inclined with respect to the tire circumferential direction. The inclination angle of the lateral groove 1 herein means the angle formed between a straight line passing along a center of the groove width of the lateral groove 1 and the tire circumferential direction. In the case where the bend portion 1A is included as illustrated in the figure, inclination angles α₁ and α₂ on both sides of the bend portion 1A are defined. The inclination angles α₁ and α₂ of the lateral groove 1 with respect to the tire circumferential direction are each preferably in a range of 40 to 90°, more preferably in a range of 45 to 55°, irrespective of inclination direction. The lateral groove 1 disposed to have the inclination angles α₁ and α₂ falling within a range of 40 to 90° with respect to the tire circumferential direction results in mitigating the rigidity of the tire moving in a straight line to improve the ride comfort, which is preferable.

The groove width of the lateral groove 1 may be 5 to 10 mm, for example. The groove width of the lateral groove 1 herein means the width as measured on the tread portion along a direction orthogonal to the direction in which the groove extends. As shown in the figure, the groove width of the lateral groove 1 may vary along the direction in which the groove extends. The groove depth of the lateral groove 1 may be 2 to 7 mm, for example.

Concerning the position of the lateral groove 1 with respect to the tire circumferential direction in the present invention, the lateral grooves 1 may be alternately arranged from side to side across the tire equator CL on the tread portion; in other words, the lateral grooves 1 may be arranged to be shifted from each other by 1/2 to 1/3 of an arrangement pitch. In the pattern illustrated in the figure, patterns symmetrical with respect to the tire equator CL are placed from side to side on the tread portion to be shifted from each other by 1/2 of the pitch. No specific restriction is imposed on an arrangement pitch of the lateral groove 1 according to the present invention, but the arrangement pitch may be, for example, about 1/10 to 1/20 of the whole circumference of the tire.

In the present invention, the two-wheel side tire 10 may include a groove other than the lateral groove 1. The two-wheel side tire 10 illustrated in the figure has a pattern including a first inclined groove 2 and a second inclined groove 3, the first inclined groove 2 having both ends terminated within one side of the tread portion with respect to the tire width direction, and the second inclined groove 3 having one end terminated within one side of the tread portion with respect to the tire width direction and the other end opened at the tread end TE. The reference symbol 4 represents a shallow groove extending to connect the lateral groove 1 and the inclined grooves 2 and 3.

In the present invention, the tread portion of the two-wheel side tire 10 has a negative ratio x preferably falling within a range of 5 to 30%, and particularly preferably falling within a range of 15 to 25%. The tread portion of the two-wheel side tire 10 having a negative ratio x falling within such range results in mitigated rigidity of the tire moving in a straight line and in a lighter-weight tire, further improving the ride comfort and handling performance, which is preferable. In particular, in regard to improving the handling performance, it is more preferable to define the negative ratio x in conjunction with the conditions for inclination angles of the lateral groove described above. The negative ratio herein means the ratio of an area of grooves to an area of the tread portion (= (area of grooves)/(area of tread portion) × 100(%)).

In addition, in the present invention, the ratio x/y of the negative ratio x regarding the tread portion of the two-wheel side tire 10 to the negative ratio y regarding the tread portion of the one-wheel side tire is preferably greater than 1. In other words, the one-wheel side tire preferably has a more rigid tread portion. The aforementioned ratio x/y suitably falls within a range of 1.1 to 2.5. The ratio x/y greater than 1 provides a better balance between front and rear wheels, resulting in much better ride comfort and handling performance. The ratio x/y not higher than 2.5 ensures that the one-wheel side has a certain area of grooves to provide good drainage performance, which is more preferable.

The tire set according to the present invention can provide the contemplated effects of the present invention, as long as the two-wheel side tire satisfies the foregoing conditions for tire diameters and lateral grooves. Thus, no specific restriction is imposed on conditions for the internal structure of the two-wheel side tire or for the one-wheel side tire other than the tire diameter.

For example, each of the two-wheel side tire and the one-wheel side tire in the tire set of the present invention includes a tread portion, a pair of side wall portions extending from both ends of the tread portion with respect to the width direction, a pair of bead portions, and at least one carcass ply toroidally extending between a pair of bead cores each embedded in each bead portion to constitute a skeleton. At least one belt can be placed tire-radially outside the crown portion of the carcass ply. Typical examples of the belt that can be used include a single spiral belt made up of a layer in which reinforcing cords wound substantially along the tire circumferential direction are coated with rubber.

The carcass ply is made up of a layer in which reinforcing cords are coated with rubber. At least one carcass ply needs to be disposed, and thus two or more carcass plies, or one to three carcass plies, for example, may be disposed. The carcass ply is usually retained by turning up each of both ends thereof around the bead core from the inside to the outside of the tire. However, no specific restriction is imposed on how the carcass ply is retained. For example, the carcass ply may be retained by sandwiching both ends thereof between bead wires. The angle formed by reinforcing cords in the carcass ply with the tire width direction is 0 to 25° for radial tires and 40 to 70° for bias tires. In addition, as reinforcing cords in the carcass ply, organic fiber cords are usually used including, for example, aliphatic polyamide (nylon), aromatic polyamide (aramid), rayon, or polyesters such as polyethylene naphthalate (PEN) and polyethylene terephthalate (PET).

The belt placed tire-radially outside the crown portion of the carcass ply is not limited to an aspect in which a single spiral belt is disposed. For example, two or more spiral belts may be placed, or the spiral belt may be replaced by an inclined belt made up of a layer in which reinforcing cords forming an angle of 15 to 30° with the tire circumferential direction are coated with rubber. A single inclined belt or two or more inclined belts, such as one to three inclined belts, may be disposed. In the case of two or more inclined belts, the inclined belts are placed so as to at least partly cross each other between layers. In general, two inclined belts are placed so as to cross each other between layers. As reinforcing cords in the spiral belt or inclined belt, steel cords as well as organic fiber cords including, for example, aliphatic polyamide (nylon), aromatic polyamide (aramid), rayon, or polyesters such as polyethylene naphthalate (PEN) and polyethylene terephthalate (PET), may be used.

In the present invention, it is particularly preferable that the two-wheel side tire has a structure in which two carcass plies serve as a skeleton and the crown portion is reinforced by a single spiral belt, or specifically a spiral belt including organic fiber cords, because a longitudinal spring can be reduced.

The tire set of the present invention is a set of tires to be mounted on front and rear wheels, three wheels in total, of a three-wheeled vehicle, or a motor tricycle in particular. The tire set is particularly useful for a motor tricycle having two wheels at the front and one wheel at the rear capable of high-speed running. Although the present invention can be applied to tires having either a radial or bias structure, suitably the two-wheel side tire is a radial tire, and more suitably both the two-wheel side and one-wheel side tires are radial tires.

### EXAMPLES

The present invention will now be described in more detail by using examples.

In accordance with the conditions shown in the tables below, a tire set for three-wheeled vehicles was produced, the tire set being to be mounted on a motor tricycle that is configured with two front wheels and one rear wheel and includes a mechanism for tilting the tires during cornering. Each of the two-wheel side tires used for Examples had a tread pattern as illustrated in FIG. 1. The sizes of the front tire and the rear tire were 120/70R15M/C and 190/55R17M/C, respectively.

Each of the obtained specimens of tire sets was evaluated with regard to the ride comfort during high-speed running, the handling performance, and the lightness in weight.

### (Ride comfort during high-speed running)

Rider's feeling of ride comfort during high-speed running at 240 km/hr was evaluated, the rider riding a motor tricycle of a type having two wheels at the front and one wheel at the rear and having a mechanism for tilting tires during cornering, with a specimen of tire sets assembled onto rims in rim sizes 15M/C × MT3.50 for front and 17M/C × MT6.00 for rear, filled with an internal pressure of 290 kPa, and mounted on the motor tricycle. Results were expressed as index values based on 100 of Comparative Example 1. A higher index value represents more excellent ride comfort and a better result.

### (Handling performance)

Rider's feeling of handling performance was evaluated under the same conditions as above. Results were expressed as index values based on 100 of Comparative Example 1. A higher index value represents more excellent handling performance and a better result.

### (Lightness in weight)

The specimens of tire sets were each weighed and results were expressed as index values based on 100 of Comparative Example 1. A lower index value represents more excellent lightness in weight and a better result.

The results are summarized in the tables below.

**[Table 1]**

| | Example 1 | Example 2 | Example 3 | Example 4 | Example 5 | Example 6 |
|---|---|---|---|---|---|---|
| Rb/Rm^{∗1} | 0.86 | 0.86 | 0.86 | 0.86 | 0.86 | 0.86 |
| Lateral groove present/absent^{∗2} | Present | Present | Present | Present | Present | Present |
| Lateral groove inclination angle (°)^{∗3} | 50 | 65 | 40 | 50 | 65 | 50 |
| Two-wheel side tire negative ratio x (%)^{∗4} | 20 | 20 | 20 | 30 | 30 | 15 |
| One-wheel side tire negative ratio y (%)^{∗5} | 12.8 | 12.8 | 12.8 | 12.8 | 12.8 | 12.8 |
| Ratio x/y between negative ratios | 1.56 | 1.56 | 1.56 | 2.36 | 2.36 | 1.18 |
| Ride comfort during high-speed running (index value) | 120 | 120 | 110 | 120 | 120 | 110 |
| Handling (index value) | 120 | 110 | 113 | 110 | 107 | 113 |
| Lightness (index value) | 80 | 80 | 80 | 75 | 75 | 85 |

| | | | | | | |
|---|---|---|---|---|---|---|
| ^{∗}1) The ratio Rb/Rm of the two-wheel side tire diameter Rb to the one-wheel side tire diameter Rm. *2) Present/absent indicating whether the two-wheel side tire includes a lateral groove extending across the tire equator on a tread portion. The width of a lateral groove allowed to vary in a range from 7 to 10 mm and the depth thereof allowed to vary in a range from 2.5 to 3.8 mm. *3) Inclination angle of a lateral groove with respect to the tire circumferential direction. *4) Negative ratio in a tread portion of the two-wheel side tire. *5) Negative ratio in a tread portion of the one-wheel side tire. | | | | | | |

**[Table 2]**

| | Example 7 | Example 8 | Comparative Example 1 | Comparative Example 2 |
|---|---|---|---|---|
| Rb/Rm^{∗1} | 0.86 | 0.86 | 1 | 0.94 |
| Lateral groove present/absent^{∗2} | Present | Present | Absent | Absent |
| Lateral groove inclination angle (°)^{∗3} | 65 | 50 | - | - |
| Two-wheel side tire negative ratio x (%)^{∗4} | 15 | 5 | 5 | 5 |
| One-wheel side tire negative ratio y (%)^{∗5} | 12.8 | 12.8 | 5 | 5 |
| Ratio x/y between negative ratios | 1.18 | 0.39 | 1 | 1 |
| Ride comfort during high-speed running (index value) | 105 | 103 | 100 | 100 |
| Handling (index value) | 110 | 105 | 100 | 103 |
| Lightness (index value) | 85 | 90 | 100 | 95 |

As seen in the tables above, Examples each demonstrated good results regarding the ride comfort during high-speed running, the handling performance, and the lightness in weight.

### DESCRIPTION OF SYMBOLS

- 1: Lateral groove
- 1A: Bend portion
- 2: First inclined groove
- 3: Second inclined groove
- 4: Shallow groove
- 10: Two-wheel side tire
- TE: Tread end

## Claims

1. The use of a tire set for three-wheeled vehicles to mount the tire set on a three-wheeled vehicle that is configured with two front wheels and one rear wheel and includes a mechanism for tilting tires during cornering,
wherein a two-wheel side tire (10) mounted on the two-wheel side has a tire diameter smaller than a tire diameter of a one-wheel side tire mounted on the one-wheel side, **characterized in that** the two-wheel side tire (10) comprises a lateral groove (1) extending across a tire equator (CL) on a tread portion.

2. The use of a tire set for three-wheeled vehicles according to claim 1, wherein a negative ratio x in the tread portion of the two-wheel side tire (10) is within a range from 5 to 30% and an inclination angle (α₁, α₂) of the lateral groove (1) with respect to a tire circumferential direction is within a range from 40 to 90°.

3. The use of a tire set for three-wheeled vehicles according to claim 1 or 2, wherein the two-wheel side tire (10) is a radial tire.

4. The use of a tire set for three-wheeled vehicles according to any one of claims 1 to 3, wherein a ratio x/y of the negative ratio x in the tread portion of the two-wheel side tire (10) to the negative ratio y in the tread portion of the one-wheel side tire is greater than 1.

5. The use of a tire set for three-wheeled vehicles according to claim 4, wherein the ratio x/y of the negative ratio x in the tread portion of the two-wheel side tire (10) to the negative ratio y in the tread portion of the one-wheel side tire is 1.1 to 2.5.

6. The use of a tire set for three-wheeled vehicles according to any one of claims 1 to 5, wherein the ratio Rb/Rm of the tire diameter of the two-wheel side tires Rb to the tire diameter of the one-wheel side tire Rm satisfies 0.8 ≤ Rb/Rm ≤ 0.9.

7. The use of a tire set for three-wheeled vehicles according to any one of claims 1 to 6 to mount the tire set on a motor tricycle.

## Patentansprüche

1. Verwendung eines Reifensatzes für dreirädrige Fahrzeuge, um den Reifensatz an einem dreirädrigen Fahrzeug zu montieren, das mit zwei Vorderrädern und einem Hinterrad konfiguriert ist, und einen Mechanismus zum Neigen von Reifen während einer Kurvenfahrt einschließt,
wobei ein Zweiradseitenreifen (10), der auf der Zweiradseite montiert ist, einen Reifendurchmesser aufweist, der kleiner ist als ein Reifendurchmesser eines Einradseitenreifens, der auf der Einradseite montiert ist,
**dadurch gekennzeichnet, dass** der Zweiradseitenreifen (10) eine seitliche Rille (1) umfasst, die sich über einen Reifenäquator (CL) auf einem Laufflächenabschnitt erstreckt.

2. Verwendung eines Reifensatzes für dreirädrige Fahrzeuge nach Anspruch 1, wobei ein negatives Verhältnis x in dem Laufflächenabschnitt des Zweiradseitenreifens (10) innerhalb eines Bereichs von 5 bis 30 % liegt und ein Neigungswinkel (α₁, α₂) der seitlichen Rille (1) in Bezug auf eine Reifenumfangsrichtung innerhalb eines Bereichs von 40 bis 90° liegt.

3. Verwendung eines Reifensatzes für dreirädrige Fahrzeuge nach Anspruch 1 oder 2, wobei der Zweiradseitenreifen (10) ein Radialreifen ist.

4. Verwendung eines Reifensatzes für dreirädrige Fahrzeuge nach einem der Ansprüche 1 bis 3, wobei ein Verhältnis x/y des negativen Verhältnisses x in dem Laufflächenabschnitt des Zweiradseitenreifens (10) zu dem negativen Verhältnis y in dem Laufflächenabschnitt des Einradseitenreifens größer als 1 ist.

5. Verwendung eines Reifensatzes für dreirädrige Fahrzeuge nach Anspruch 4, wobei das Verhältnis x/y des negativen Verhältnisses x in dem Laufflächenabschnitt des Zweiradseitenreifens (10) zu dem negativen Verhältnis y in dem Laufflächenabschnitt des Einradseitenreifens 1,1 bis 2,5 beträgt.

6. Verwendung eines Reifensatzes für dreirädrige Fahrzeuge nach einem der Ansprüche 1 bis 5, wobei das Verhältnis Rb/Rm des Reifendurchmessers der Zweiradseitenreifen Rb zu dem Reifendurchmesser des Einradseitenreifens Rm 0,8 ≤ Rb/Rm ≤ 0,9 erfüllt.

7. Verwendung eines Reifensatzes für dreirädrige Fahrzeuge nach einem der Ansprüche 1 bis 6, um den Reifensatz an einem Motordreirad zu montieren.

## Revendications

1. Utilisation d'un jeu de pneumatiques pour des véhicules à trois roues pour monter le jeu de pneumatiques sur un véhicule à trois roues qui est configuré avec deux roues avant et une roue arrière et inclut un mécanisme d'inclinaison de bandages pneumatiques dans des virages,
dans laquelle un pneumatique du côté à deux roues (10) monté sur le côté à deux roues a un diamètre de pneumatique inférieur à un diamètre de pneumatique d'un pneumatique du côté à une roue monté sur le côté à une roue,
**caractérisée en ce que** le pneumatique du côté à deux roues (10) comprend une rainure latérale (1) s'étendant à travers un équateur de pneumatique (CL) sur une partie de bande de roulement.

2. Utilisation d'un jeu de pneumatiques pour des véhicules à trois roues selon la revendication 1, dans laquelle un rapport négatif x dans la partie de bande de roulement du pneumatique du côté à deux roues (10) est compris dans un intervalle allant de 5 à 30 %, et un angle d'inclinaison (α₁, α₂) de la rainure latérale (1) par rapport à une direction circonférentielle du pneumatique est compris dans un intervalle allant de 40 à 90°.

3. Utilisation d'un jeu de pneumatiques pour des véhicules à trois roues selon les revendications 1 ou 2, dans laquelle le pneumatique du côté à deux roues (10) est un pneumatique radial.

4. Utilisation d'un jeu de pneumatiques pour des véhicules à trois roues selon l'une quelconque des revendications 1 à 3, dans laquelle un rapport x/y entre le rapport négatif x dans la partie de bande de roulement du pneumatique du côté à deux roues (10) et le rapport négatif y dans la partie de bande de roulement du pneumatique du côté à une roue est supérieur à 1.

5. Utilisation d'un jeu de pneumatiques pour des véhicules à trois roues selon la revendication 4, dans laquelle le rapport x/y entre le rapport négatif x dans la partie de bande de roulement du pneumatique du côté à deux roues (10) et le rapport négatif y dans la partie de bande de roulement du pneumatique du côté à une roue est compris entre 1,1 et 2,5.

6. Utilisation d'un jeu de pneumatiques pour des véhicules à trois roues selon l'une quelconque des revendications 1 à 5, dans laquelle le rapport Rb/Rm entre le diamètre de pneumatique des pneumatiques du côté à deux roues Rb et le diamètre de pneumatique du pneumatique du côté à une roue Rm satisfait la relation de 0,8 ≤ Rb/Rm ≤ 0,9.

7. Utilisation d'un jeu de pneumatiques pour des véhicules à trois roues selon l'une quelconque des revendications 1 à 6 pour monter le jeu de pneumatiques sur un tricycle à moteur.
